# EUROPÄISCHE PATENTSCHRIFT

(11) **EP 0 635 388 B1**
(45) Veröffentlichungstag und Bekanntmachung des Hinweises auf die Patenterteilung: **22.01.1997**
(21) Anmeldenummer: 94108364.4
(22) Anmeldetag: 31.05.1994
(51) Int. Cl.: B60K 20/02, B62D 1/08, F16H 59/04

(54) **Kraftfahrzeug mit einer Betätigungseinrichtung am Lenkrad**
Motor vehicle with control device mounted on the steering wheel
Véhicule à moteur avec dispositif de commande au volant

(30) Priorität: 23.07.1993 DE 4324788; 05.03.1994 DE 4407429
(43) Veröffentlichungstag der Anmeldung: 25.01.1995
(73) Patentinhaber: Dr.Ing.h.c. F. Porsche Aktiengesellschaft, D-70435 Stuttgart (DE)
(72) Erfinder: Türi, Julius, D-71397 Leutenbach (DE)

(56) Entgegenhaltungen:
- EP-A- 0 456 511
- EP-A- 0 519 528
- EP-A- 0 532 987
- WO-A-92/06860
- DE-A- 3 941 665
- DE-A- 4 005 588

## Beschreibung

Die Erfindung bezieht sich auf eine Betätigungseinrichtung nach dem Oberbegriff des Anspruchs 1.

Aus der DE-40 05 588 A1 ist eine Schaltvorrichtung für ein automatisches Getriebe bekannt, die einen in mindestens einer Schaltgasse geführten Wählhebel aufweist. Mit diesem sind verschiedene Getriebegänge sowohl in einer automatischen als auch in einer manuellen Schaltgasse vorwählbar. Die manuelle Schaltung in dieser Schaltgasse weist von einer Mittelstellung ausgehende, durch Antippen schaltbare Ganghoch- und -rückschaltstellungen auf. Die automatische Schaltung wird in der Schaltgasse vorgenommen, welche die Getriebeschaltstellungen, wie Parkstellung, Rückwärtsfahrstellung und Vorwärtsschaltstellungen aufweist, was durch entsprechendes Verschieben des Wählhebels in dieser Gasse bewirkt wird. Zum Schalten der Gänge wird ein Lenkstockschalter verwendet. Ferner ist eine weitere Ausführung mit einem Wählhebel bekannt, der unmittelbar den Schaltgassen zugeordnet ist und nach Art eines Wippschalters betätigbar ist und die Getriebegänge manuell durch Antippen in die Hoch- und Rückschaltposition schaltbar sind.

Desweiteren ist aus der DE-39 41 665 A1 ein Kraftfahrzeug mit einem Automatikgetriebe bekannt, bei der Betätigungselemente für eine Gangwahl und/oder eine Programmwahl am Lenkrad angeordnet sind. Diese Betätigungselemente bestehen aus unmittelbar ansteuerbaren Druckschaltern, mit denen die einzelnen Gänge des automatischen Getriebes eingegeben werden können.

Aus der WO-A-92/06860 ist eine Betätigungseinrichtung nach dem Oberbegriff des Anspruchs 1 bekannt, bei der in einer Lenkradspeiche ein Betätigungsschalter in einer Öffnung eingesteckt gehalten ist und über diesen mehrere Funktionen des Fahrzeugs über Schaltelemente angesteuert werden. Hierzu ist der Betätigungsschalter in bezug auf das Lenkrad in Längs- und Querrichtung verstellbar.

Aufgabe der Erfindung ist es, eine Betätigungseinrichtung für eine manuelle und/oder automatische Schaltung eines lastschaltbaren Getriebes zu schaffen, mit der eine manuelle Schaltung des Getriebes griffgünstig vom Lenkrad aus durchführbar ist und die Einrichtung aus einer kompakten, ins Lenkrad integrierten Baueinheit besteht.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß ein lastschaltbares Getriebe wahlweise über einen den Schaltgassen zugeordneten Wählhebel automatisch schaltbar, aber auch eine manuelle Gangwahl durchzuführen ist und zusätzlich hierzu die manuelle Schaltung statt über den Wählhebel im Bereich der Schaltgassen auch über eine griffgünstig dem Lenkrad zugeordnete Betätigungseinrichtung erfolgen kann, wenn der Wählhebel in einer manuellen Schaltgasse steht.

Die Betätigungseinrichtung besteht im wesentlichen aus einer Schaltwippe, welche mit der Lenkradspeiche verbunden ist. Sie ist benachbart des Lenkradkranzes in der Weise angeordnet, daß eine Stellbewegung der Schaltwippe von den Fingern einer Bedienhand des Fahrers ohne ein Loslassen des Lenkrads erfolgen kann.

Die Schaltwippe weist hierzu an ihrer Betätigungsoberfläche mindestens eine entsprechende Vertiefung sowie mindestens eine Erhöhung auf, die ein Ertasten und Positionieren des Fingers zum Verschwenken der Schaltwippe in einfacher Weise ermöglicht.

Die Betätigungseinrichtung besteht aus der an einem Gehäuse verschwenkbar gelagerten Schaltwippe, wobei das Gehäuse mit der Lenkradspeiche über eine Schraubverbindung befestigt ist. Die Baueinheit Schaltwippe und Gehäuse sind in der Weise ausgebildet, daß sie einen Teil der im Querschnitt etwa kreisförmigen Lenkradspeiche bildet.

Die Schaltwippe weist im Inneren einen als Schaltelement ausgebildeten Hebel auf, der mit seinem freien Ende auf zwei Druckschalter einwirkt, die mit einer elektrischen Steuereinrichtung des Antriebssystems zusammenarbeiten.

Zum Betätigen der Druckschalter, welche vorzugsweise koaxial mit zwischenliegendem Hebel im Gehäuse gelagert sind, wird die Schaltwippe um die Achse durch Druck über einen Finger der Bedienhand des Fahrers nach zwei Seiten bzw. Richtungen verschwenkt. Der Verschwenkweg ist gleichzeitig der Schaltweg für die Druckschalter.

Das Gehäuse besteht aus einem einfach herzustellenden Bauteil, welches zwischen Wandungen die beiden Druckschalter aufnimmt und die Lagerorte für die Schwenkachse der Schaltwippe bildet.

Die Betätigungseinrichtung ist so ausgebildet, daß die Außenoberfläche mit der Kontur einer Polsterung der Lenkradspeiche eine bündig verlaufende Außenoberfläche bildet.

Die höchste flächige Erhebung dieser Außenoberfläche liegt etwa in der vom Lenkradkranz und einer Lenkradprallplatte gebildeten Außenebene. Vorzugsweise sind die Vertiefung und die Erhöhung zum Betätigen der Schaltwippe hintereinanderliegend quer zur Lenkradquerachse angeordnet und etwa hinter und vor der höchsten Erhebung der Außenoberfläche der Schaltwippe liegend, vorgesehen. Die Schaltwippe kann an zwei Seiten des Lenkradkranzes in den Speichen angeordnet sein, so daß eine Bedienung von der linken und/oder von der rechten Bedienhand vorgenommen werden kann.

Die Baueinheit kann durch ihre Kompaktheit in einfacher Weise in herkömmlichen Lenkrädern nachgerüstet werden.

Die mit der Erfindung hauptsächlich erzielten Vorteile bestehen darin, daß durch die Ausbildung der Schaltwippe der Betätigungseinrichtung mit zwei hintereinanderliegend angeordneten Vertiefungen in der Außenoberfläche eine gute haptische Anordung des Schaltfingers einer Bedienhand des Fahrers gewährleistet ist. Es hat sich in der Preis bei einem Vergleich zwischen zwei Vertiefungen in der Schaltwippe und einer Vertiefung und einer Erhöhung in der Schaltwippe gezeigt, daß die Variante mit zwei Vertiefungen weitestgehend einfacher zu bedienen ist.

Vorteilig nach der Erfindung ist außerdem, daß der Steg zwischen den beiden Vertiefungen, die als sogenannte Fingermulden ausgeführt sind, ein Quersteg ausgebildet ist, der in Querrichtung eine konvexe Wölbung aufweisen kann. Ein derartiger Quersteg dient nicht nur als Trennung zwischen den beiden Vertiefungen, sondern kann auch zum Betätigen der Schaltstufen des Getriebes bzw. zum Runterschalten der Gangstufen des Getriebes verwendet werden. Dies hat sich als vorteilig insoweit erwiesen, daß der in der oberen Vertiefung zum Hochschalten liegende Finger der Bedienhand des Fahrers, den Weg zur weiter entfernt liegenden Vertiefung zum Runterschalten nicht nimmt, sondern der Quersteg als Ersatz für die untere Vertiefung wahrgenommen wird. Um einen optimalen Anschlag zum Runterschalten für den Bedienfinger zu erzielen, kann der Quersteg in Querrichtung der Schaltwippe leicht gewölbt ausgeführt sein.

Vorzugsweise kann die Schaltwippe mit den beiden Vertiefungen bei einem Vierspeichen-Lenkrad in allen vier Lenkradspeichen angeordnet sein, damit auch bei Kurven, insbesondere langgestreckten Kurven, die Bedienhand des Fahrers immer einer Schaltwippe zuzuordnen ist.

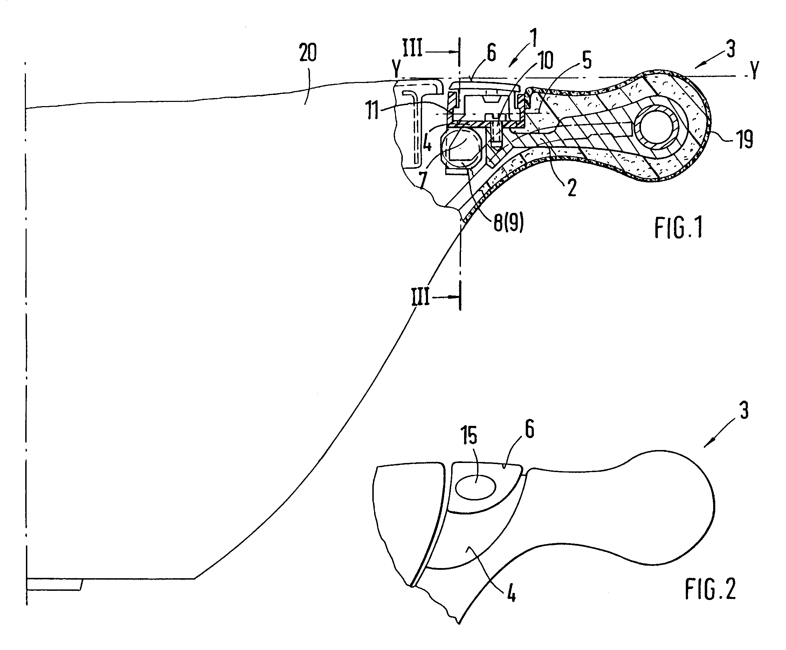

Ein Ausführungsbeispiel der Erfindung ist in der Zeichnung dargestellt und wird im folgenden näher beschrieben.
Es zeigen
- Fig. 1: einen Schnitt durch ein Lenkrad für ein Kraftfahrzeug im Bereich einer Betätigungseinrichtung,
- Fig. 2: eine Ansicht auf die Betätigungseinrichtung,

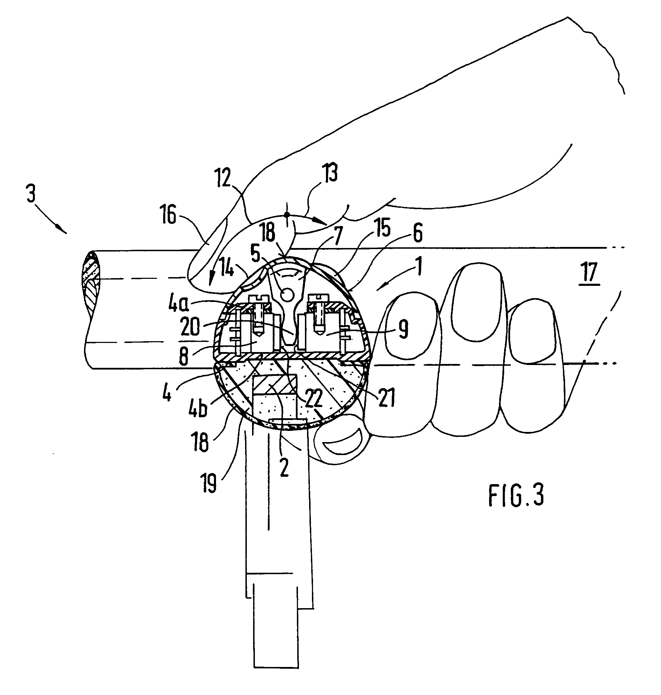

- Fig. 3: einen Schnitt nach der Linie III-III der Fig. 1,

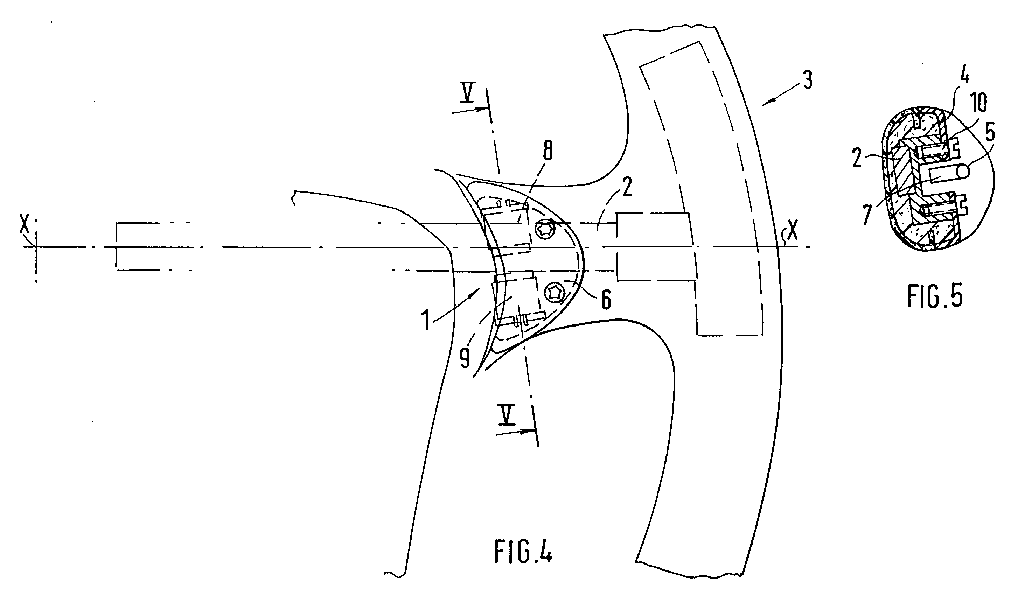

- Fig. 4: eine Draufsicht auf das Lenkrad mit Betätigunseinrichtung und
- Fig. 5: einen Schnitt nach der Linie V-V der Fig. 4,
- Fig. 6: einen Aufbau einer Schaltwippe einer Betätigungseinrichtung im Schnitt im eingebauten Zustand,
- Fig. 7: eine Vorderansicht der Schaltwippe,
- Fig. 8 u. 9: Ansichten auf die Vertiefungen und
- Fig. 10: einen Schnitt durch eine Schaltwippe mit Ansicht auf die beiden Vertiefungen.

Die Betätigungseinrichtung 1 ist an einer Speiche 2 eines Lenkrads 3 gehalten und umfaßt im wesentlichen ein mit dieser verbundenes Gehäuse 4, eine um eine Achse 5 verschwenkbare Schaltwippe 6 mit Schaltelement 7 sowie Druckschalter 8 und 9.

Das Gehäuse 4 bildet eine Schale mit oberen Wandungsteilen 4a und einem unteren Wandungsteil 4b, das über Schrauben 10 mit der Speiche 2 verbunden ist. Über Lagerstellen 11 im Gehäuse 4 ist die Schaltwippe 6 um die Achse 5 nach zwei Seiten in Pfeilrichtungen 12 und 13 verschwenkbar zum Gehäuse 4 gehalten. Mit der Schaltwippe 6 ist innenseitig ein als Schaltelement 7 bezeichneter Hebel vorragend angeordnet. Dieser nimmt eine Lage zwischen den zwei Druckschaltern 8 und 9 ein, welche koaxial zueinanderliegend angeordnet sind. Diese Druckschalter 8 und 9 sind zwischen den Wandungsteilen 4a und 4b des Gehäuses 4 gehalten und über Schrauben zusätzlich festgesetzt.

Die Schaltwippe 6 weist an ihrer Außenoberfläche zur Betätigung mindestens eine Vertiefung 14 und eine Erhöhung 15 zur Positionierung eines Fingers 16 einer Bedienhand 17 des Fahrers auf. Diese Betätigungsfixpunkte 14 und 15 sind senkrecht zur Lenkradquerachse X-X hintereinanderliegend angeordnet.

Die Erhöhung 15 nach Art eines linsenförmigen Nockens ist beispielsweise vor der Schwenkachse 5 und die Vertiefung 14 ist beispielsweise hinter der Schwenkachse 5 angeordnet, wobei die Bezeichnung hinter und vor der Schwenkachse in bezug auf die Fahrtrichtung des Fahrzeugs ausgelegt ist.

Die Schaltwippe 4 weist eine gewölbte Außenoberfläche auf, deren höchste flächige Erhebung 18 etwa in der vom Lenkradkranz und einer Lenkradprallplatte 20 gebildeten Ebene Y-Y liegen.

Eine Betätigung der Schaltwippe 6 zum manuellen Schalten eines Getriebes erfolgt beispielsweise durch eine Druckausübung mittels des Fingers 12 auf die Vertiefung 14. Hierdurch verschwenkt sich die Schaltwippe 6 um die Achse 5 in Pfeilrichtung 12, wobei das freie Ende 20 des Hebels 7 auf eine Betätigungsfläche 21 des Druckschalters 9 einwirkt und beispielsweise ein Hochschaltvorgang ausgelöst wird. Entsprechend wird durch Druck auf die Erhöhung 15 mittels des Fingers 12 die Schaltwippe 6 in Pfeilrichtung 13 verschwenkt, wobei dann auf die Betätigungsfläche 22 des Druckschalters 8 eingewirkt wird und beispielsweise ein Rückschaltvorgang erfolgt. Bei allen diesen Vorgängen ist ein Wählhebel zum Schalten eines Getriebes in einer manuellen Schaltgasse angeordnet.

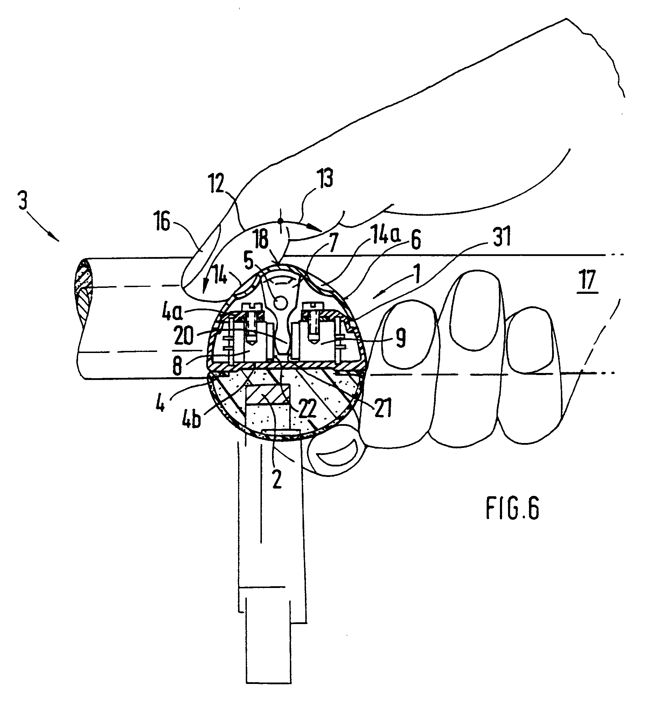

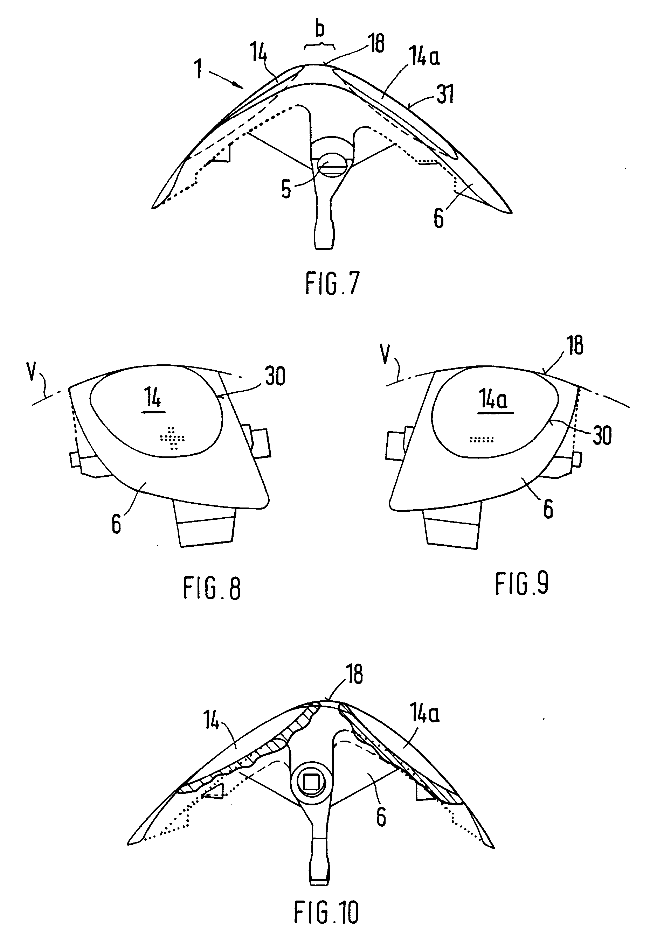

Nach einer weiteren Ausführung der Erfindung gem. der Fig. 6 bis 10 weist die Schaltwippe 6 an ihrer Außenoberfläche zur Betätigung zwei Vertiefungen 14 und 14a zur Positionierung eines Fingers 16 einer Bedienhand 17 des Fahrers auf. Diese Betätigungsfixpunkte 14 und 14a sind senkrecht zur Lenkradquerachse hinereinanderliegend angeordnet.

Die Schaltwippe 4 weist vorzugsweise eine gewölbte Außenoberfläche auf, deren höchste flächige Erhebung 18 etwa in der vom Lenkradkranz und einer Lenkradprallplatte gebildeten Ebene liegen.

Eine Betätigung der Schaltwippe 6 zum manuellen Schalten eines Getriebes erfolgt beispielsweise durch eine Druckausübung mittels des Fingers 16 auf die Vertiefunge 14. Hierdurch verschwenkt sich die Schaltwippe 6 um die Achse 5 in Pfeilrichtung 12, wobei das freie Ende 20 des Hebels 7 auf eine Betätigungsfläche 21 des Druckschalters 9 einwirkt und beispielsweise ein Hochschaltvorgang ausgelöst wird. Entsprechend wird Druck auf die weitere Vertiefung 14a mittels des Fingers 12 die Schaltwippe 6 in Pfeilrichtung 13 verschwenkt, wobei dann auf die Betätigungsfläche 22 des Druckschalters 8 eingewirkt wird und beispielsweise ein Rückschaltvorgang erfolgt. Bei allen diesen Vorgängen ist ein Wählhebel zum Schalten eines Getriebes in einer manuellen Schaltgasse angeordnet.

Die Vertiefungen 14, 14a sind in Form von Fingermulden ausgeführt und weisen einen Begrenzungsrand 30 auf.
Zwischen den beiden Vertiefungen 14, 14a ist der als flächige Erhebung 18 ausgebildete Quersteg angeordnet. Dieser liegt bündig in der Oberflächenkontur 31 der Schaltwippe 6 und weist in Querrichtung einen konvexen bogenförmigen Verlauf V auf. Der Quersteg 18 ist relativ schmal mit einer Breite b ausgeführt, damit der Weg zwischen den Vertiefungen 14, 14a gering ist. In vorteilhafter Weise kann die Schaltwippe 6 bei entsprechender Anordnung der Speichen 2 des Lenkrades 3 in jeder Rippe angeordnet sein.

## Patentansprüche

1. Betätigungseinrichtung zum Schalten eines lastschaltbaren Getriebes in einem Kraftfahrzeug über einen in einer Lenkradspeiche angeordneten fingerbetätigten Schalter mit hintereinanderliegenden Grifflächen zum manuellen Hoch- und Herunterschalten des Getriebes, dadurch gekennzeichnet, daß die Betätigungseinrichtung mittels eines Gehäuses (4) in der Lenkradspeiche eingebettet ist und eine Schaltwippe (6) umfaßt, deren Schwenkachse (5) parallel zur Längsachse der Lenkradspeiche liegt und ein Schaltelement (7) der Schaltwippe (6) zwischen achsgleich angeordneten Druckschaltern (8, 9) verschwenkbar ist und die Außenoberfläche der Schaltwippe (6) eine mit der Außenkontur des Speichenpolsters (19) bündig verlaufende Oberfläche ergibt.

2. Betätigungseinrichtung nach Anspruch 1, dadurch gekennzeichnet, daß das Schaltelement (7) aus einem mit der Schaltwippe (6) verbundenem und über die Schwenkachse (5) im Gehäuse (4) gelagerten Hebel (7) besteht, der mit seinem freien Ende (20) zwischen Betätigungsflächen (21, 22) der Druckschalter (8, 9) angeordnet ist.

3. Betätigungseinrichtung nach den Ansprüchen 1 oder 2, dadurch gekennzeichnet, daß das Gehäuse (4) die Druckschalter (8, 9) zwischen Wandungsteilen (4a und 4b) hält, wobei das Gehäuse (4) zwischen der Schaltwippe (6) und der von einer Polsterung (19) umgegebenen Lenkradspeiche (2) angeordnet ist.

4. Betätigungseinrichtung nach Anspruch 1 oder einem der vorhergehenden Ansprüche, dadurch gekennzeichnet, daß die Schaltwippe (6) an ihrer fingerbetätigten Oberfläche mindestens eine Vertiefung (14) und eine Erhöhung (15) zur Betätigung aufweist.

5. Betätigungseinrichtung nach Anspruch 4, dadurch gekennzeichnet, daß die Vertiefung (14) und die Erhöhung (15) auf einer abgerundeten Außenoberfläche der Schaltwippe (6) hintereinanderliegend - in bezug auf eine Lenkradquerachse X-X - angeordnet sind.

6. Betätigungseinrichtung nach Anspruch 1 oder einem der vorhergehenden Ansprüche, dadurch gekennzeichnet, daß die Vertiefung (14) und die Erhöhung (15) zu beiden Seiten der Schwenkachse (5) angeordnet sind.

7. Betätigungseinrichtung nach Anspruch 1 oder einem der vorhergehenden Ansprüche, dadurch gekennzeichnet, daß die höchste flächige Erhebung (18) der abgerundeten Oberfläche der Schaltwippe (6) annähernd in einer Ebene Y-Y der höchsten Erhebung des Lenkradkranzes sowie der Lenkradprallplatte (20) verläuft.

8. Betätigungseinrichtung nach Anspruch 1, dadurch gekennzeichnet, daß ein Quersteg (18) parallel zur Längsachse der Lenkradspeiche mit einer Wölbung entlang einer Formlinie (V) konvex gewölbt ausgeführt ist und eine höchste Erhebung in der Längsmittenachse der Schaltwippe (6) aufweist, die annähernd mittig durch die Vertiefungen (14) bzw. Erhöhungen (15) verläuft.

9. Betätigungseinrichtung nach Anspruch 1, dadurch gekennzeichnet, daß bei einem Vierspeichen-Lenkrad in jeder Lenkradspeiche eine Schaltwippe (6) angeordnet ist.

## Claims

1. An actuating device for shifting a power-shift transmission in a motor vehicle by way of a finger-actuated switch situated in a steering-wheel spoke and having gripping surfaces arranged in succession for shifting the transmission up and down manually, **characterized in that** the actuating device is embedded in the steering-wheel spoke by means of a casing (4) and comprises a gear-shifting rocker (6), the pivot shaft (5) of which is orientated parallel to the longitudinal axis of the steering-wheel spoke, and a gear-shifting member (7) of the gear-shifting rocker (6) is pivotable between pressure switches (8, 9) arranged coaxially, and the outer surface of the gear-shifting rocker (6) forms a surface extending flush with the outer contour of the spoke upholstery (19).

2. An actuating device according to Claim 1, **characterized in that** the gear-shifting member (7) comprises a lever (7) which is connected to the gear-shifting rocker (6) and is mounted in the casing (4) by way of the pivot shaft (5) and which is arranged with its free end (20) between actuation faces (21, 22) of the pressure switches (8, 9).

3. An actuating device according to Claim 1 or 2, **characterized in that** the casing (4) holds the pressure switches (8, 9) between wall portions (4a and 4b), wherein the casing (4) is arranged between the gear-shifting rocker (6) and the steering-wheel spoke (2) surrounded by upholstery (19).

4. An actuating device according to Claim 1 or one of the preceding Claims, **characterized in that** the gear-shifting rocker (6) is provided on its finger-actuated surface with at least one depression (14) and a raised portion (15) for actuation purposes.

5. An actuating device according to Claim 4, **characterized in that** the depression (14) and the raised portion (15) are arranged in succession - with respect to a transverse axis **X-X** of the steering wheel - on a rounded outer surface of the gear-shifting rocker (6).

6. An actuating device according to Claim 1 or one of the preceding Claims, **characterized in that** the depression (14) and the raised portion (15) are arranged on both sides of the pivot shaft (5).

7. An actuating device according to Claim 1 or one of the preceding Claims, **characterized in that** the highest point (18) of the area of the rounded surface of the gear-shifting rocker (6) extends substantially in a plane **Y-Y** of the highest point of the steering-wheel rim and of the steering-wheel impact plate (20).

8. An actuating device according to Claim 1, **characterized in that** a transverse web (18) is formed parallel to the longitudinal axis of the steering-wheel spoke and is curved in a convex manner with a curvature along a line (**V**) and has a highest point in the longitudinal median axis of the gear-shifting rocker (6), which extends substantially centrally through the depressions (14) and raised portions (15).

9. An actuating device according to Claim 1, **characterized in that** in the case of a four-spoke steering wheel one gear-shifting rocker (6) is arranged in each steering-wheel spoke.

## Revendications

1. Dispositif d'actionnement pour commander le passage des rapports d'une boîte de vitesse à commutation en fonction de la charge, dans un véhicule automobile, par l'intermédiaire d'un interrupteur actionné par le doigt, disposé sur une branche du volant, avec des prises situées les unes derrière les autres pour manoeuvrer en montée et en descente les rapports de la boîte, caractérisé en ce que le dispositif d'actionnement est intégré, au moyen d'un boîtier (4), dans la branche de volant et comprend un commutateur (6) dont l'axe de pivotement (5) est parallèle à l'axe longitudinal de la branche de volant, et un élément de commutation (7) du commutateur (6) pouvant pivoter entre des poussoirs (8, 9) disposés coaxialement et la surface extérieure du commutateur (6) donnant une surface en continuité avec le contour extérieur du rembourrage de branche (19).

2. Dispositif d'actionnement selon la revendication 1, caractérisé en ce que l'élément de commutation (7) est constitué d'un levier (7), relié au commutateur (6) et tourillonnant sur l'axe de pivotement (5) dans le boîtier (4), levier disposé avec son extrémité libre (20) placée entre les surfaces d'actionnement (21, 22) des poussoirs (8, 9).

3. Dispositif d'actionnement selon la revendication 1 ou 2, caractérisé en ce que le boîtier (4) maintient les poussoirs (8, 9) entre des parties de paroi (4a et 4b), le boîtier (4) étant disposé entre le commutateur (6) et la branche de volant (2) entourée par un rembourrage (19).

4. Dispositif d'actionnement selon la revendication 1 ou l'une des revendications précédentes caractérisé en ce que le commutateur (6) présente pour l'actionnement, sur sa surface actionnée par les doigts, au moins un creusement (14) et un bombement (15).

5. Dispositif d'actionnement selon la revendication 4, caractérisé en ce que le creusement (14) et le bombement (15) sont disposés sur une surface extérieure arrondie du commutateur (7), l'un derrière l'autre -par rapport à l'axe transversal X-X du volant.

6. Dispositif d'actionnement selon la revendication 1 ou l'une des revendications précédentes caractérisé en ce que le creusement (14) et le bombement (15) sont disposés des deux côtés de l'axe de pivotement (5).

7. Dispositif d'actionnement selon la revendication 1 ou l'une des revendications précédentes caractérisé en ce que le bombement (18) le plus haut et en continuité avec la surface arrondie du commutateur (6) s'étend à peu près dans le plan Y-Y du bombement le plus haut de la couronne de volant (1), ainsi que de la plaque d'impact (20) du volant.

8. Dispositif d'actionnement selon la revendication 1, caractérisé en ce qu'une nervure transversale (18) est réalisée, parallèlement à l'axe longitudinal de la branche de volant avec une courbure convexe le long d'une ligne profilée Y et présente un bombement de hauteur maximale dans l'axe longitudinal du commutateur (6) qui s'étend à peu près centralement à travers les creusements (14) ou les bombements (15).

9. Dispositif d'actionnement selon la revendication 1, caractérisé en ce que pour un volant à quatre branches, une manette d'interrupteur (6) est disposée dans chaque branche du volant.
